# FASCICULE DE BREVET EUROPEEN

(11) **EP 4 004 086 B1**
(45) Date de publication et mention de la délivrance du brevet: **26.11.2025**
(21) Numéro de dépôt: 20756924.5
(22) Date de dépôt: 27.07.2020
(51) Int. Cl.: C08G 77/12, C08G 77/20, C08G 77/00, C08L 83/04, C09D 183/04, C08J 7/04

(54) **COMPOSITION DE CAOUTCHOUC SILICONE POUR REVÊTEMENT DE MEMBRANE DE CUISSON**
SILIKONKAUTSCHUKZUSAMMENSETZUNGEN FÜR BESCHICHTUNG EINER AUSHÄRTEMEMBRAN
SILICONE RUBBER COMPOSITION FOR COATING OF CURING MEMBRANE

(30) Priorité: 29.07.2019 FR 1908585
(43) Date de publication de la demande: 01.06.2022
(73) Titulaire: COMPAGNIE GENERALE DES ETABLISSEMENTS MICHELIN, 63000 Clermont-Ferrand (FR)
(72) Inventeur: FEDURCO, Milan, 63040 CLERMONT-FERRAND Cedex 9 (FR); RIBEZZO, Marco, 63040 CLERMONT-FERRAND Cedex 9 (FR); DELFINO, Antonio, 63040 CLERMONT-FERRAND Cedex 9 (FR); FAUGERAS, Alain, 63040 CLERMONT-FERRAND Cedex 9 (FR)
(74) Mandataire: M.F.P. Michelin
(86) Numéro de dépôt international: PCT/FR2020/051379
(87) Numéro de publication internationale: WO 2021/019177

(56) Documents cités:
- EP-A1- 0 659 857
- WO-A1-01/12895
- FR-A1- 2 840 911

## Description

Le domaine de la présente invention est celui des compositions de caoutchouc silicone renforcées destinées à être utilisées comme revêtement adhésif sur une surface de membrane de cuisson.

Les compositions de caoutchouc silicone sont connues pour adhérer à des substrats tels que les verres, les métaux ou les matières organiques plastiques. Le document US 20100210794 décrit des combinaisons de polyorganosiloxanes fonctionnels qui sont constitutives de compositions de caoutchouc silicone. Ces combinaisons ont pour caractéristique de contenir un couple de polyorganosiloxanes réactifs entre eux, par exemple l'un des polyorganosiloxanes a des groupes terminaux alcoxysilane ou silanol, l'autre des groupes époxy ou des liaisons Si-H. Dans le document US 20130323428, il a été montré qu'une composition de caoutchouc silicone réticulée qui comprend un polydiméthylsiloxane portant des groupes terminaux vinyles, un polydiméthylsiloxane portant des groupes terminaux SiHMe₂ et un copolymère ayant des unités diméthylsiloxy et méthylhydrosiloxy et portant des groupes terminaux SiMe₃ présente une bonne adhérence vis-à-vis de substrat inorganique, comme le verre, l'aluminium et le silicium.

Néanmoins, ces solutions ne sont pas satisfaisantes pour des substrats qui sont soumis à des conditions sévères d'utilisation, comme par exemple des cycles répétés de déformation d'au moins 100% en présence de vapeur chaude sous forte pression. C'est typiquement le cas de substrats à base de caoutchouc diénique tels que les membranes de cuisson expansibles utilisées dans les procédés traditionnels de fabrication de pneumatiques.

Pour augmenter l'adhérence d'une composition de caoutchouc silicone à un substrat, une solution proposée consiste à modifier la surface du substrat avant d'apposer la composition de caoutchouc silicone à la surface du substrat. La modification de la surface du substrat peut être réalisée par exemple par un traitement au plasma, par un traitement au corona ou par un traitement avec un primaire d'adhésion, le traitement avec un primaire d'adhésion pouvant être complémentaire à un traitement au plasma ou corona.

Les primaires d'adhésion sont des silanes sensibles à l'humidité et à la température et permettent de renforcer les forces d'adhésion entre le substrat et la composition de caoutchouc silicone. Mais le traitement avec un primaire d'adhésion ne conduit pas non plus à une adhérence des compositions connues de silicone qui résiste aux conditions sévères d'utilisation ci-dessus mentionnées.

Le document FR 2 840 911 décrit une composition de caoutchouc silicone destinée à être utilisée comme revêtement de surfaces à base de textile, polyester, polyéthylène ou d'élastomère silicone. La composition comprend en particulier de la silice hydrophobe, un organopolysiloxane linéaire liquide ayant une chaîne silicone terminée par des groupements vinyle, une huile organohydrogénosilicone linéaire comprenant uniquement des groupes SiH le long de la chaîne, un catalyseur d'hydrosilylation au platine et des microparticules de polyamides. Les compositions peuvent être enduites sur des revêtements textiles ou sur une une surface pré-enduite d'une couche silicone.

Le document WO 01/12895 décrit une composition de silicone utilisée pour le revêtement de matières textiles, préférentiellement ayant été préalablement traitées de manière préférentielle par un revêtement élastomérique. Les compositions comprennent de la silice hydrophobe, un organopolysiloxane linéaire liquide ayant une chaîne silicone terminée par des groupements vinyles, une huile organohydrogénosilicone linéaire ayant des motifs SiH le long de la chaîne et un catalyseur d'hydrosilylation au platine.

Finalement, le EP 0 659 857 se réfère à la préparation d'une composition de silicone utilisée pour le revêtement de surfaces à base de caoutchouc tel que le caoutchouc isopène-isobutyle. Les compositions sont constituées de silanes à fonctions epoxydes, silanes à fonction amines et d'une dispersion aqueuse de particules réticulées de silicone obtenues par réticulation d'un organopolysiloxane linéaire liquide ayant une chaîne silicone terminée par des groupements vinyles, une huile organohydrogénosilicone linéaire ayant des motifs SiH le long de la chaîne et d'un catalyseur d'hydrosilylation au platine.

La Demanderesse a découvert une nouvelle composition de caoutchouc silicone qui présente des propriétés adhésives et mécaniques davantage améliorées vis-à-vis de substrat constitué de caoutchouc diénique, même en l'absence d'un traitement préalable au plasma ou au corona ou avec primaire d'adhésion.

Ainsi, un premier objet de l'invention est une composition de caoutchouc silicone qui comprend une silice hydrophobe, un premier organopolysiloxane liquide ayant des motifs de répétition (R₂SiO_{2/2}) et ayant deux extrémités de chaîne portant chacune un groupe alcényle, un deuxième organopolysiloxane liquide ayant des motifs de répétition (R'HSiO_{2/2}) et ayant deux extrémités de chaîne portant chacune un groupe SiR'₃O_{1/2}, un catalyseur d'hydrosilylation au Pt(0) complexé par des ligands divinyltétraalkylsiloxane, le deuxième organopolysiloxane étant un polyhydroalkylsiloxane, le ratio entre le nombre de motifs (R'HSiO_{2/2}) et le nombre de groupes alcényles étant supérieur à 5, les symboles R, identiques ou différents, représentant un groupe alkyle, aryle ou aralkyle, les symboles R', identiques ou différents, représentant un groupe alkyle.

Un deuxième objet de l'invention est un stratifié comprenant une première couche d'une composition réticulée de caoutchouc diénique et une deuxième couche d'une composition de caoutchouc silicone conforme à l'invention, la deuxième couche recouvrant directement la première couche.

### Description :

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans la présente demande, on entend par substance liquide une substance ayant la capacité de prendre à terme la forme de son contenant à température ambiante (23°C).

La composition de caoutchouc silicone selon l'invention a pour caractéristique essentielle de comprendre un premier organopolysiloxane qui contient des motifs (R₂SiO_{2/2}) et un deuxième organopolysiloxane qui contient des motifs (R'HSiO_{2/2}) et des motifs SiR'₃O_{1/2}, les symboles R représentant un groupe alkyle, aryle ou aralkyle, les symboles R' représentant un groupe alkyle. Les groupes représentés par les symboles R et R' contiennent de préférence 1 à 8 atomes de carbone, de manière plus préférentielle 1 à 3 atomes de carbone.

Le premier organopolysiloxane a des motifs de répétition (R₂SiO_{2/2}) dans lesquels les symboles R, identiques ou différents, représentent un groupe alkyle, aryle ou aralkyle, préférentiellement alkyle. Au sein du premier organopolysiloxane, les motifs de formule (R₂SiO_{2/2}) peuvent se différencier les uns des autres par la nature de R. De préférence, les groupes représentés par les symboles R dans les motifs (R₂SiO_{2/2}) contiennent 1 à 8 atomes de carbone, plus préférentiellement 1 à 3 atomes de carbone. De manière encore plus préférentielle, les symboles R dans les motifs (R₂SiO_{2/2}) représentent un méthyle. Le premier organopolysiloxane est préférentiellement un polydialkylsiloxane, plus préférentiellement un polydiméthylsiloxane.

Selon l'invention, deux des extrémités de chaîne du premier organopolysiloxane portent chacune un groupe alcényle. On entend par groupe alcényle un groupe hydrocarboné qui contient une double liaison carbone-carbone. De préférence, les groupes alcényles sont des groupes vinyles, de formule bien connue -CH=CH₂. Très avantageusement, deux des extrémités de chaîne du premier organopolysiloxane portent chacune un groupe vinyle. Lorsque le premier organopolysiloxane est à chaîne linéaire, le premier organopolysiloxane est un organopolysiloxane α,ω-alcényle, de préférence α,ω-vinyle. De préférence, le premier organopolysiloxane est à chaîne linéaire.

Le premier organopolysiloxane est un polyorganosiloxane liquide. De préférence, il a une masse moléculaire moyenne en poids supérieure à 5000 g/mol et inférieure à 200 000 g/mol. De manière plus préférentielle, il a une masse moléculaire moyenne en poids supérieure à 10000 g/mol et inférieure à 150 000 g/mol.

Le premier organopolysiloxane peut être un produit disponible commercialement, par exemple auprès de Wacker, Gelest, Dow Corning, Bluestar, Shin-Etsu, Cabot. Il peut être aussi un mélange de plusieurs organopolysiloxanes qui se différencient les uns des autres par leurs motifs de répétition ou leur macrostructure.

Le deuxième organopolysiloxane est un polyhydroalkylsiloxane. Les motifs de formule (R'HSiO_{2/2}) dans lesquels le symbole R' représente un groupe alkyle, sont les motifs de répétition du deuxième organopolysiloxane. En d'autres termes, toutes les unités monomères du deuxième organopolysiloxane sont de formule (R'HSiO_{2/2}). Au sein du deuxième organopolysiloxane, les motifs de formule (R'HSiO_{2/2}) peuvent se différencier les uns des autres par la nature de R'. De préférence, le groupe représenté par R' contient 1 à 8 atomes de carbone, plus préférentiellement 1 à 3 atomes de carbone. De manière encore plus préférentielle, les symboles R' représentent un méthyle, auquel cas le deuxième organopolysiloxane est préférentiellement un polyhydrométhylsiloxane.

Selon l'invention, deux des extrémités de chaîne du deuxième organopolysiloxane portent chacune un groupe SiR'₃O_{1/2}, les symboles R', identiques ou différents, représentant un groupe alkyle. De préférence, les groupes représentés par les symboles R' dans SiR'₃O_{1/2} contiennent 1 à 8 atomes de carbone, plus préférentiellement 1 à 3 atomes de carbone. De manière encore plus préférentielle, les symboles R' dans SiR₃O_{1/2} représentent un méthyle. Très avantageusement, deux des extrémités de chaîne du deuxième organopolysiloxane portent chacune un groupe SiMe₃O_{1/2}. Lorsque le deuxième organopolysiloxane est à chaîne linéaire, le deuxième organopolysiloxane est un polyhydroalkylsiloxane α,ω-SiR'₃O_{1/2}, de préférence polyhydroalkylsiloxane α,ω-SiMe₃O_{1/2}. De préférence, le deuxième organopolysiloxane est à chaîne linéaire.

Avantageusement, le deuxième organopolysiloxane est un polyhydrométhylsiloxane α,ω-SiMe₃O_{1/2}.

Le deuxième organopolysiloxane est un polyorganosiloxane liquide. De préférence, il a une masse moléculaire moyenne en poids supérieure à 500 g/mol et inférieure à 30 000 g/mol. De manière plus préférentielle, il a une masse moléculaire moyenne en poids supérieure à 500 g/mol et inférieure à 10 000 g/mol. De manière encore plus préférentielle, il a une masse moléculaire moyenne en poids supérieure à 1000 g/mol et inférieure à 5000 g/mol.

Le deuxième organopolysiloxane peut être un produit disponible commercialement, par exemple auprès de Wacker, Gelest, Sigma-Aldrich. Il peut être aussi un mélange de plusieurs organopolysiloxanes qui se différencient les uns des autres par les motifs de répétition ou la macrostructure.

De préférence, au moins l'un des premier organopolysiloxane et deuxième organopolysiloxane est à chaîne linéaire. Avantageusement, les deux, c'est-à-dire le premier organopolysiloxane et le deuxième organopolysiloxane, sont à chaîne linéaire.

Les quantités respectives du premier organopolysiloxane et du deuxième organopolysiloxane dans la composition selon l'invention sont régies par le ratio entre le nombre de motifs (R'HSiO_{2/2}) et le nombre de groupes alcényles et sont ajustées en conséquence en tenant compte des proportions relatives des motifs alcényles dans le premier organopolysiloxane et des proportions relatives des motifs (R'HSiO_{2/2}) dans le deuxième organopolysiloxane.

Une caractéristique essentielle de la composition de caoutchouc silicone conforme à l'invention est le ratio entre le nombre de motifs (R'HSiO_{2/2}) du deuxième organopolysiloxane introduit dans la composition de caoutchouc et le nombre de groupes alcényles du premier organopolysiloxane introduit dans la composition de caoutchouc. Selon l'invention, ce ratio entre le nombre de motifs (R'HSiO_{2/2}) et le nombre de groupes alcényles est supérieur à 5. Une valeur inférieure ou égale à 5 conduit à une composition dont les propriétés mécaniques et adhésives sont insuffisantes pour une utilisation en tant que revêtement sur une surface diénique d'un substrat soumis à de nombreux cycles de déformation. Avantageusement, ce ratio est supérieur à 15, très avantageusement supérieur à 25. De préférence, ce ratio est inférieur à 100, préférentiellement inférieur à 90. Selon un mode de réalisation très préférentiel, ce ratio est supérieur à 15 et inférieur à 100. Avantageusement, ce ratio est supérieur à 25 et inférieur à 90.

La composition de caoutchouc silicone conforme à l'invention a aussi pour caractéristique de contenir un catalyseur d'hydrosilylation destiné à catalyser la réaction d'hydrosilylation des organosiloxanes de la composition de caoutchouc silicone par réaction des motifs (R'HSiO_{2/2}) du deuxième organopolysiloxane et des groupes alcényles du premier organopolysiloxane. Le catalyseur d'hydrosilylation est un catalyseur au platine Pt(0) complexé par des ligands divinyltétraalkylsiloxane, de préférence 1,3-divinyltétraméthylsiloxane. De tels catalyseurs sont par exemple décrits dans le document WO 0142258 A1. Convient tout particulièrement le catalyseur de Karstedt. Comme dans toute réaction d'hydrosilylation conventionnelle, la quantité de catalyseur dans la composition est catalytique. Par quantité catalytique on entend moins d'un équivalent molaire de platine par rapport à la quantité d'insaturations de type double liaison oléfinique présentes dans la composition. De façon générale, il suffit d'introduire moins de 1000 ppm et de préférence plus de 30 ppm de platine calculé par rapport à la masse totale du premier organopolysiloxane et du deuxième organopolysiloxane.

La réaction des motifs (R'HSiO_{2/2}) du deuxième organopolysiloxane et des groupes alcényles du premier organopolysiloxane par hydrosilylation conduit à la réticulation des organopolysiloxanes de la composition de caoutchouc silicone et permet de produire une composition de caoutchouc silicone réticulée. La réticulation est déclenchée typiquement en portant la composition de caoutchouc silicone à une température suffisante pour permettre la réaction d'hydrosilylation. Elle est conduite généralement à une température comprise entre 15 et 300°C, par exemple entre 20°C et 240°C, mieux encore entre 70 et 200°C.

De manière connue, les compositions de silicones réticulables contiennent généralement un inhibiteur. Les inhibiteurs sont généralement utilisés pour régler la température et le temps de la réaction de réticulation par hydrosilylation et maitriser ainsi davantage la réaction de réticulation, notamment son démarrage et sa vitesse. Si un inhibiteur de réticulation est utilisé, la quantité d'inhibiteur utilisée est préférentiellement de 1 à 50000 ppm, plus préférentiellement de 20 à 2000 ppm, et notamment de 100 à 1000 ppm, par rapport à la masse totale du premier organopolysiloxane et du deuxième organopolysiloxane. Comme inhibiteur conviennent tout particulièrement les alcools acétyléniques, comme le 1-éthynyl-1-cyclohexanol, le 2-méthyl-3-butyn-2-ol, le 3,5-diméthyl-1-hexyne-3-ol, le 3-méthyl-1-dodecyn-3-ol, le 2-phényl-3-butyn-2-ol. De préférence, la composition de caoutchouc silicone selon l'invention contient un inhibiteur.

La composition de caoutchouc silicone selon l'invention a aussi pour caractéristique essentielle de comprendre une silice hydrophobe. De manière connue, une silice hydrophobe est une silice dont une partie de la surface est recouverte de groupes organiques tels que des groupes alkyles. La silice peut être toute silice renforçante connue de l'homme du métier, notamment toute silice précipitée ou pyrogénée. De préférence, la silice présente une surface spécifique BET inférieure à 450 m²/g, de manière préférentielle comprise dans un domaine allant de 80 à 400 m²/g, notamment de 100 à 300 m²/g, avantageusement de 150 à 250 m²/g. On peut aussi utiliser un mélange de plusieurs silices.

Pour rendre la silice hydrophobe, il est bien connu de modifier la surface de la silice. La modification de la surface d'une silice peut être obtenue de manière connue par réaction de la silice avec des composés qui portent des groupes hydrophobes comme les groupes trialkylsilyles, notamment triméthylsilyles. Convient tout particulièrement une silice qui a une surface modifiée par des groupes triméthylsilyles. On peut citer par exemple celles obtenues par modification par l'hexaméthyldisilazane. Selon l'un quelconque des modes de réalisation de l'invention, la silice hydrophobe présente préférentiellement une teneur en carbone supérieure à 2%, plus préférentiellement supérieure ou égale à 3% en poids par rapport à la masse de silice.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0.05 à 0.17].

Le taux de silice hydrophobe est ajusté par l'homme du métier en fonction de sa surface spécifique et de l'usage de la composition de caoutchouc silicone. De préférence, le taux de silice hydrophobe dans la composition de caoutchouc silicone est supérieur ou égal à 5% du poids total de silice, du premier organopolysiloxane et du deuxième organopolysiloxane et inférieur ou égal à 40% du poids total de silice, du premier organopolysiloxane et du deuxième organopolysiloxane. En dessous de 5% du poids total de silice, du premier organopolysiloxane et du deuxième organopolysiloxane, les propriétés renforçantes de la composition peuvent s'avérer insuffisantes pour certaines applications. Au-delà de 40% du poids total de silice, du premier organopolysiloxane et du deuxième organopolysiloxane, la composition de caoutchouc silicone peut s'avérer trop rigide.

La composition de caoutchouc silicone conforme à l'invention peut être à l'état cru (avant réticulation) ou l'état cuit (après réticulation). A l'état cuit, elle présente de bonnes propriétés adhésives vis-à-vis de la surface d'un caoutchouc diénique, notamment réticulée, comme la surface d'une membrane de cuisson expansible à base de caoutchouc butyl.

La composition de caoutchouc silicone peut comprendre en outre des microparticules de polyamide. Les microparticules de polyamide peuvent être des produits disponibles commercialement, par exemple par la société Arkema telles que celles commercialisées sous le nom « Orgasol ». Les microparticules de polyamide peuvent être de toute forme, préférentiellement elles sont sphériques.

Les microparticules de polyamide présentent de préférence une température de fusion supérieure à 100°C, préférentiellement supérieure à 150°C. La température de fusion est conventionnellement mesurée selon la norme ASTM D3418-03. A titre de polyamides qui conviennent, on peut citer le nylon 6, le nylon 6,6, le nylon 6,10, le nylon 6,12, le nylon 11 et le nylon 12. Les microparticules de polyamide présentent de préférence une granulométrie de 5 à 100 µm, avantageusement de 10 à 70 µm. La granulométrie est déterminée typiquement selon la norme ISO 13319-2007.

L'incorporation de microparticules de polyamide permet d'améliorer les propriétés de résistance au frottement de la composition de caoutchouc réticulée sans que les propriétés de renforcement et de souplesse de la composition réticulée de caoutchouc silicone et sans que ses propriétés d'adhésion vis-à-vis d'une surface d'une composition réticulée de caoutchouc diénique, en particulier butyl, ne soient dégradées. En effet, les microparticules de polyamide ne sont pas arrachées de la composition réticulée de caoutchouc silicone sous l'effet d'un frottement abrasif, ce qui traduit la bonne capacité à l'état cuit de la composition de caoutchouc silicone à retenir les microparticules de polyamide, même sous l'effet d'un frottement abrasif. Cette bonne capacité de rétention lui confère une bonne résistance au frottement. Cette bonne résistance au frottement est maintenue même après plusieurs cycles de déformation de la composition réticulée de caoutchouc silicone.

Le taux de microparticules de polyamide dans la composition de caoutchouc silicone est préférentiellement supérieur ou égal à 5% du poids total de microparticules de polyamide, de silice, du premier organopolysiloxane et du deuxième organopolysiloxane et inférieur ou égal à 15% du poids total de microparticules de polyamide, de silice, du premier organopolysiloxane et du deuxième organopolysiloxane.

La composition de caoutchouc silicone conforme à l'invention peut être préparée par l'incorporation de la silice hydrophobe au premier organopolysiloxane, suivie de l'addition du deuxième polyorganosiloxane sous mélangeage, enfin celle du catalyseur. Lorsqu'un inhibiteur est utilisé, il est typiquement ajouté au mélange de silice hydrophobe et du premier organopolysiloxane avant l'incorporation du deuxième organopolysiloxane. Pour faciliter le mélangeage, il est ajouté de préférence un solvant silicone, de préférence le décaméthylcyclopentasiloxane. L'ajout du solvant permet non seulement de faciliter l'incorporation des constituants de la composition de caoutchouc silicone et leur homogénéisation dans la composition de caoutchouc silicone, mais aussi d'ajuster la viscosité de la composition de caoutchouc silicone en vue de son application sur un substrat.

La composition de caoutchouc silicone conforme à l'invention est typiquement appliquée sur un substrat sous forme de couche, par exemple à l'aide de pinceau, de brosse ou par projection (« spray » en anglais). Lorsque la composition de caoutchouc est appliquée sous la forme d'une couche sur une surface d'un substrat, surface constituée d'un caoutchouc diénique, préférentiellement réticulée, la composition de caoutchouc silicone ainsi appliquée sur le substrat est réticulée.

Lorsque la composition de caoutchouc silicone contient un solvant pour faciliter l'incorporation et l'homogénéisation de ses constituants et ajuster sa viscosité, tout ou partie du solvant est éliminé au cours de la réticulation de la composition de caoutchouc silicone.

La couche de la composition de caoutchouc réticulée présente préférentiellement une épaisseur allant de 10 à 500 µm.

Selon un mode de réalisation particulièrement préférentiel de l'invention, le substrat est un caoutchouc diénique ou une composition de caoutchouc diénique, le caoutchouc diénique étant préférentiellement un caoutchouc butyl.

L'invention concerne aussi un stratifié. Le stratifié conforme à l'invention comprend une première couche d'une composition réticulée de caoutchouc diénique et une deuxième couche d'une composition de caoutchouc silicone conforme à l'invention, décrite selon l'un quelconque des modes de réalisation de l'invention relatifs à la composition de caoutchouc silicone. Dans le stratifié conforme à l'invention, la deuxième couche recouvre directement la première couche. Par « la deuxième couche recouvre directement la première couche » on entend que le deuxième couche recouvre la première couche tout en étant à son contact. La deuxième couche peut recouvrir directement tout ou partie la deuxième couche. Avantageusement, la deuxième couche recouvre directement la totalité de la deuxième couche. Préférentiellement, la composition réticulée de caoutchouc diénique de la première couche comprend un caoutchouc butyl qui représente avantageusement plus de 90%, mieux 100% en masse de la totalité des élastomères de la composition réticulée de caoutchouc diénique de la première couche.

Selon un mode de réalisation particulier du stratifié conforme à l'invention, la première couche est constituée d'une composition réticulée de caoutchouc diénique comprenant un caoutchouc butyl et est constitutive d'une membrane de cuisson expansible, notamment destinée à la fabrication de pneumatique. Le stratifié selon ce mode de réalisation particulier constitue tout ou partie une membrane de cuisson expansible, la deuxième couche présentant une épaisseur allant préférentiellement de 10 à 500 µm. Le stratifié présente à la fois de bonnes propriétés de renforcement et de souplesse pour une utilisation dans une membrane de cuisson expansible, ainsi qu'une bonne résistance au décollement.

Les membranes de cuisson expansibles, notamment destinées à la fabrication de pneumatique sont bien connues de l'homme du métier. Elles sont constituées de compositions à base de caoutchouc butyl, halogéné ou non. Le caoutchouc butyl est un copolymère d'isobutylène et d'isoprène connu pour ses propriétés d'étanchéité. Une composition de caoutchouc constitutive d'une membrane de cuisson contient généralement une charge renforçante telle qu'un noir de carbone. Elle contient aussi un système de réticulation composé d'une résine. Les systèmes de réticulation composés d'une résine et utilisés pour réticuler des compositions de caoutchouc pour membrane de cuisson expansible sont aussi bien connus de l'homme du métier. La résine est typiquement une résine phénolique, halogénée ou non. A titre de résine phénolique, on peut citer les résines formophénoliques. La composition de caoutchouc constitutive d'une membrane de cuisson peut comprendre divers ingrédients comme des antioxydants, des antiozonants, des pigments, des cires, des plastifiants comme des huiles de mise en œuvre.

L'application de la composition de caoutchouc silicone conforme à l'invention sous forme de couche sur une composition de caoutchouc diénique peut se faire par tout moyen connu de l'homme du métier, par exemple à l'aide d'un pinceau ou par projection de la composition de caoutchouc silicone.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples :

### II.1 Tests et mesures :

### Test d'allongement :

L'échantillon à tester est obtenu par un emporte-pièce de 10[mm] x 140[mm]. L'échantillon est placé dans un étau. A l'aide d'une pince et d'une règle de 300[mm], on étire l'échantillon jusqu'à avoir 100% de déformation. Cette déformation est faite 10x à une fréquence de 1 Hz.

### Test de frottement :

Il est effectué sur une barre en acier de rugosité environ 1.6. Diamètre 12[mm] et longueur 70[mm]. On place la barre verticalement dans l'étau. On prend l'échantillon déjà testé en allongement. On effectue des va-et-vient de l'échantillon avec une courbure de 180° côté traité (face de l'échantillon revêtue de la composition de caoutchouc silicone) contre la barre en exerçant une force de frottement de 5 kilogramme-force. On répète 20 cycles, un cycle correspondant à un va-et-vient à une fréquence comprise entre 1 et 2 Hz.

### Analyse :

Après le test d'allongement ou de frottement, l'échantillon est observé par analyse de microscopie à balayage (modèle FEG 250 de la société FEI/ThermoFischer, détecteur ETD Everhart Thornley detector, 1 kV) pour vérifier la présence ou non de fissures ou de décollement. L'analyse de microscopie permet d'estimer aussi l'épaisseur de la couche de la composition de caoutchouc silicone appliquée comme revêtement.

### II.2 Préparation des compositions de caoutchouc et résultats :

### Exemple 1 non conforme à l'invention :

Une membrane de cuisson à base de caoutchouc butyl est exposée à un traitement par plasma dont la tête du dispositif est placée à 1 cm de la surface de la membrane (vitesse d'activation : 5 cm/min ; sous air comprimé à la pression de 5 bars, sous rotation de la tête du dispositif de plasma « PlasmaTreat »). Immédiatement après, la surface de la membrane est recouverte au pinceau d'une solution d'un primaire d'adhésion (« PM820 », Bluestar). On évapore le solvant sous air chaud convectif à 80 °C pendant 30 secondes. Immédiatement après, une composition de silicone RTV2 qui est composée d'un mélange de silicones (« Vario15 »/ « Vario 40 » : 4 / 1, ratio massique) et de catalyseur « Vario KAT » (Wacker) dans les proportions massiques (10/1) et à laquelle a été ajouté le catalyseur de Karstedt (45 ppm Pt par rapport à la masse totale du premier organopolysiloxane et du deuxième organopolysiloxane; produit Sigma Aldrich à 2% dans le xylène), est appliquée sous forme de couche sur la membrane. Le stratifié formé de la membrane de cuisson et de la couche de caoutchouc silicone est porté à 140°C pendant 30 minutes dans un four à air ventilé pour réticuler la composition de caoutchouc silicone.

La composition de caoutchouc silicone réticulée d'épaisseur 20-40 µm présente une bonne adhérence à la membrane et ne se décolle pas de la membrane même après une élongation à 100% de déformation. En l'absence du traitement chimique par plasma ou par le primaire d'adhésion, la composition de caoutchouc silicone réticulée se détache facilement de la membrane.

### Exemple 2 non conforme à l'invention :

Une membrane de cuisson à base de caoutchouc butyl est dégraphitée, puis recouverte à l'aide d'un pinceau d'une solution d'un primaire d'adhésion « G791A »/ « G791B » (1/1) (Wacker) à laquelle a été ajouté 45 ppm de Pt (catalyseur de Karstedt, à 2% dans le xylène, Sigma Aldrich). On évapore le solvant sous air chaud convectif à 80 °C pendant 30 secondes. La membrane ainsi modifiée est porté à 120°C pendant 45 minutes, puis à 150°C pendant 15 minutes. Immédiatement après, une composition de silicone RTV2 qui est composée de « Vario15 »/ »Vario 40 » (4/1, ratio massique) et de catalyseur « Vario KAT » (Wacker) dans les proportions massique (10/1), et à laquelle a été ajouté le catalyseur de Karstedt (45 ppm Pt ; produit Sigma Aldrich à 2% dans le xylène), est appliquée sous forme de couche sur la membrane modifiée. Le stratifié résultant est porté à 120°C pendant 45 minutes, puis à 150°C pendant 15 minutes dans un four à air ventilé.

La composition de caoutchouc silicone réticulée d'épaisseur 20-40 µm présente une bonne adhérence à la membrane et ne se décolle pas de la membrane même après une élongation à 100% de déformation. Mais, en l'absence du traitement chimique par le primaire d'adhésion, la composition de caoutchouc silicone réticulée se détache facilement de la membrane.

### Exemple 3 conforme à l'invention :

Une silice pyrogénée hydrophobe (7.85 g, « HDK-2000 », Wacker) est incorporée à un 10.7 g de polydiméthysiloxane α,ω-vinyle ( « V35 », Gelest, masse moléculaire moyenne en poids, Mw, 49500 g/mol, 2 motifs vinyle/mol) par mélangeage d'une minute dans un mélangeur (« StateMix »). 8 g du mélange résultant, une fois revenu à température ambiante, (23°C), est mis en suspension dans le décaméthylcyclopentasiloxane (2,5 g, TCI) qui contient 4.8 mg d'inhibiteur (1-éthynyl-1-cyclohexanol) par mélangeage d'une minute dans le mélangeur (« StateMix »). A ce mélange résultant, une fois revenu à température ambiante (23°C), est incorporé 0.44 g de poly(méthylhydro)siloxane (PHMS) (Mw 3200 g/mol, 52 motifs (MeHSiO_{2/2}), référence 17,620-6, Sigma Aldrich) par mélangeage dans le mélangeur (« StateMix », fonctionnant à 100% de sa puissance). Le mélangeage est arrêté pour laisser revenir le mélange à température ambiante. Juste avant son utilisation, on lui ajoute 15.6 µl de catalyseur de Karstedt (2% dans le xylène, Sigma Aldrich) préalablement mis en solution dans 2.2 g de décaméthylcyclopentasiloxane. Le mélange résultant est homogénéisé dans le mélangeur (« StateMix ») pendant une minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé. Dans la composition de caoutchouc silicone, le ratio entre le nombre de motifs (MeHSiO_{2/2}) et le nombre de groupes vinyles est 38.

La composition de caoutchouc silicone réticulée d'épaisseur 20-50 µm présente une bonne adhérence à la membrane et ne se décolle pas de la membrane même après avoir subi successivement 10 élongations à 100% de déformation.

### Exemple 4 conforme à l'invention :

Une silice pyrogénée hydrophobe (3.0 g, « Aerosil R812S », Evonik) est incorporée à un polydiméthysiloxane α,ω-vinyle (10.7 g, « V35 », Gelest) par mélangeage d'une minute dans un mélangeur (« StateMix »). 8 g du mélange résultant, une fois revenu à température ambiante, (23°C), est mis en suspension dans le décaméthylcyclopentasiloxane (2,5 g, TCI) qui contient 5.97 mg d'inhibiteur (1-éthynyl-1-cyclohexanol) par mélangeage d'une minute dans le mélangeur (« StateMix »). A ce mélange résultant, une fois revenu à température ambiante (23°C), est incorporé le poly(méthylhydro)siloxane (PHMS) (0.55 g, référence 17,620-6, Sigma Aldrich) par mélangeage dans le mélangeur (« StateMix »). Le mélangeage est arrêté pour laisser revenir le mélange à température ambiante. Juste avant son utilisation, on lui ajoute 19.3 µl de catalyseur de Karstedt (2% dans le xylène, Sigma Aldrich) préalablement mis en solution dans 2.2 g de décaméthylcyclopentasiloxane. Le mélange résultant est homogénéisé dans le mélangeur (« StateMix ») pendant une minute.

La composition de caoutchouc silicone ainsi obtenue est appliquée à l'aide d'un pinceau sous la forme d'une couche sur une membrane de cuisson dégraphitée à base de caoutchouc butyl. Le stratifié résultant est porté à 150°C pendant 30 minutes dans un four à air ventilé. Dans la composition de caoutchouc silicone, le ratio entre le nombre de motifs (MeHSiO_{2/2}) et le nombre de groupes vinyles est de 35.

La composition de caoutchouc silicone réticulée d'épaisseur 20-40 µm présente une bonne adhérence à la membrane et ne se décolle pas de la membrane même après avoir subi successivement 10 élongations à 100% de déformation.

### Exemple 5 non conforme à l'invention :

L'exemple 5 se différencie de l'exemple 3 en ce qu'un copolymère poly(diméthylsiloxane-co-méthylhydrosiloxane) (référence 48,219-6, Sigma Aldrich, masse moléculaire moyenne en nombre Mn d'environ 950 g/mol, 7 motifs (MeHSiO_{2/2})) est utilisé à la place du polyméthylhydrosiloxane. Dans la composition de caoutchouc silicone, le ratio entre le nombre de motifs (MeHSiO_{2/2}) et le nombre de groupes vinyles est de 32.

La composition de caoutchouc silicone réticulée d'épaisseur 20-40 µm se décolle de la membrane après avoir subi successivement 10 élongations à 100% de déformation.

### Exemple 6 non conforme à l'invention :

L'exemple 6 se différencie de l'exemple 3 en ce qu'un copolymère poly(diméthylsiloxane-co-méthylhydrosiloxane) (référence 48,237-4, Sigma Aldrich, masse moléculaire moyenne en nombre Mn d'environ 13000, 97 motifs (MeHSiO_{2/2})) est utilisé à la place du polyméthylhydrosiloxane. Dans la composition de caoutchouc silicone, le ratio entre le nombre de motifs (MeHSiO_{2/2}) et le nombre de groupes vinyles est de 32.

La composition de caoutchouc silicone réticulée d'épaisseur 20-40 µm se décolle de la membrane après avoir subi successivement 10 élongations à 100% de déformation.

### Exemple 7 conforme à l'invention :

Une silice pyrogénée hydrophobe (3.8 g, « HDK-2000 », Wacker) est incorporée à un polydiméthysiloxane α,ω-vinyle (7.0 g, « V35 », Gelest) par mélangeage d'une minute dans un mélangeur (« StateMix »). Ce mélange résultant, une fois revenu à température ambiante, (23°C), est mis en suspension dans le décaméthylcyclopentasiloxane (4.0 g, TCI) qui contient 7.0 mg d'inhibiteur (1-éthynyl-1-cyclohexanol) par mélangeage d'une minute dans le mélangeur (« StateMix »). A ce mélange résultant, une fois revenu à température ambiante (23°C), sont incorporées les microparticules de polyamide (1.25 g, « Orgasol 2002 D NAT 1 », Arkema) par mélangeage d'une minute dans le mélangeur. Le mélangeage est arrêté pour laisser revenir le mélange à température ambiante. A ce nouveau mélange est incorporé le poly(méthylhydro)siloxane (PHMS) (0.56 g, référence 17,620-6, Sigma Aldrich) par mélangeage dans le mélangeur (« StateMix »). Le mélangeage est arrêté pour laisser revenir le mélange à température ambiante. Juste avant son utilisation, on lui ajoute 23.0 µl de catalyseur de Karstedt (2% dans le xylène, Sigma Aldrich) préalablement mis en solution dans 4 g de décaméthylcyclopentasiloxane. Le mélange résultant est homogénéisé dans le mélangeur (StateMix) pendant une minute. Dans la composition de caoutchouc silicone, le ratio entre le nombre de motifs (MeHSiO_{2/2}) et le nombre de groupes vinyles est de 32.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

La composition de caoutchouc silicone réticulée d'épaisseur 20-40 µm présente une bonne adhérence à la membrane et ne se décolle pas de la membrane même après avoir subi successivement 10 élongations à 100% de déformation.

Par ailleurs, il est observé que les microparticules de polyamide ne sont pas éliminées du revêtement par frottement. Les microparticules de polyamide ne sont pas arrachées du revêtement lorsqu'il est soumis au test de frottement.

### Exemple 8 non conforme à l'invention :

### Etape 1 :

D'un primaire d'adhésion (« G791A », Wacker), on élimine par évaporation sous vide à 40°C les solvants volatiles hydrocarbonés. Ensuite, on met en suspension 5 g du primaire d'adhésion ainsi traité dans 30.3 g de décaméthylcyclopentasiloxane (TCI). On mélange pendant une heure sous agitation d'un barreau magnétique à 23°C, puis on ajoute 7.26 mg 1-ethynyl-1-cyclohexanol dissous dans 2.0 g décaméthylcyclopentasiloxane (TCI). Ensuite, on mélange pendant une minute à 23°C. Ensuite est ajouté le polydiméthysiloxane α,ω-vinyle (5.0 g, « V35 », Gelest). Ensuite, on mélange toujours sous agitation d'un barreau magnétique pendant 15 minutes à température ambiante (23°C). On ajoute ensuite 22.4 µl de catalyseur de Karstedt (2% dans le xylène, Sigma Aldrich) préalablement mis en solution dans 2.0 g de décaméthylcyclopentasiloxane. Ensuite, on mélange pendant 5 minutes à température ambiante.

La composition de primaire d'adhésion ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

La composition de caoutchouc silicone réticulée d'épaisseur 20-40 µm présente une bonne adhérence à la membrane et ne se décolle pas de la membrane même après avoir subi successivement 10 élongations à 100% de déformation.

### Etape 2 :

Les silicones « Vario 15 » (6.54 g, Wacker) et « Vario 40 » (1.64 g Wacker) sont mélangés dans un mélangeur (« StateMix » fonctionnant à 100% de sa puissance) pendant une minute. Ensuite après ajout d'un inhibiteur (5.6 mg, 1-ethynyl-1-cyclohexanol) dissous dans 2.5 g de décaméthylcyclopentasiloxane (TCI), on mélange pendant une minute. Ensuite, on ajoute les microparticules de polyamide (1 g, « Orgasol 2002 D NAT 1 », Arkema) et on mélange pendant 1 minute, ensuite on laisse refroidir jusqu'à température ambiante (23°C). Ensuite on ajoute le catalyseur « Vario KAT » (0.82 g, Wacker), on mélange pendant 1 minute, puis on laisse refroidir jusqu'à température ambiante. Ensuite, on ajoute 17.2 µl de catalyseur de Karstedt (2% dans le xylène, Sigma Aldrich) préalablement dissous dans 2.2 g de décaméthylcyclopentasiloxane. On mélange pendant une minute.

La composition de caoutchouc silicone ainsi obtenue est appliquée sous la forme de couche sur la membrane de cuisson obtenue à l'étape 1, c'est-à-dire recouverte de la composition de primaire d'adhésion obtenue à l'étape 1. Le stratifié ainsi obtenu est porté à 150 °C pendant 30 minutes dans un four à air ventilé.

La composition de caoutchouc silicone réticulée d'épaisseur 20-30 µm présente une bonne adhérence à la membrane et ne se décolle pas de la membrane même après avoir subi successivement 10 élongations à 100% de déformation.

Néanmoins, contrairement à l'exemple 7, il est observé que les microparticules de polyamide sont éliminées du revêtement par frottement.

### Exemple 9 conforme à l'invention :

L'exemple 9 se différencie de l'exemple 7 en ce que l'inhibiteur est le 2-phényl-3-butyn-2-ol est utilisé à la place du 1-éthynyl-1-cyclohexanol.

La composition de caoutchouc silicone réticulée d'épaisseur 20-40 µm présente une bonne adhérence à la membrane et ne se décolle pas de la membrane même après avoir subi successivement 10 élongations à 100% de déformation.

Les résultats montrent que les compositions de caoutchouc silicone conformes à l'invention (exemples 3, 4, 7 et 9) présentent une bonne adhérence à la composition de caoutchouc butyl constitutive d'une membrane de cuisson, même en l'absence d'un traitement chimique préalable de la surface de la membrane. Il est aussi remarquable que ces bonnes propriétés d'adhérence persistent même après plusieurs cycles de déformation, ce qui n'est pas le cas des compositions de caoutchouc silicone non conformes à l'invention (exemples 5 et 6).

Les résultats de l'exemple 7 en comparaison avec l'exemple 8 montrent aussi que les compositions de caoutchouc silicone conformes à l'invention permettent une bonne rétention des microparticules de polyamide dans la composition de caoutchouc silicone, même sous l'effet de frottement et après plusieurs cycles de déformation.

### Exemple 10 conforme à l'invention :

Une silice pyrogénée hydrophobe (5.846 g, HDK-2000 , Wacker) est incorporée à un polydiméthysiloxane α,ω-vinyle (10.815 g, DMS V35 de masse moléculaire moyenne en poids de 49500, Gelest) par mélangeage d'une minute dans un mélangeur (« StateMix »). On ajoute ensuite une solution d'inhibiteur (11mg, 1-éthynyl-1-cyclohexanol, Aldrich E51406) dans le décamethylcyclopentasiloxane (10.366 g, TCI Europe, D1890) par mélangeage d'une minute dans le mélangeur (« StateMix »). Les microparticules de polyamide (1.95 g, « Orgasol ES3 Nat 3 », Arkema) sont ajoutées et le tout est mélangé au mélangeur 1 minute (State Mix). Dans le mélange résultant, on incorpore une solution de PHMS (0.86g, poly(méthylhydro)siloxane, Mw 3200, référence 17,620-6, Sigma Aldrich ) dans le décamethylcyclopentasiloxane (4.21g, D, TCI Europe, D1890) par mélangeage dans le mélangeur (StateMix, fonctionnant à 100% de sa puissance). On ajoute pour terminer une solution du catalyseur Karstedt (36.1 µl, Aldrich 479519) dans le décamethylcyclopentasiloxane (15.89g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé. Dans la composition de caoutchouc silicone, le ratio entre le nombre de motifs (MeHSiO_{2/2}) et le nombre de groupes vinyles est de 32.

La composition de caoutchouc silicone réticulée d'épaisseur 20-50 µm présente une bonne adhérence à la membrane et ne se décolle pas de la membrane même après avoir subi successivement 10 élongations à 100% de déformation.

Par ailleurs, il est observé que les microparticules de polyamide ne sont pas éliminées du revêtement par frottement. Les microparticules de polyamide ne sont pas arrachées du revêtement lorsqu'il est soumis au test de frottement.

### Exemple 11 conforme à l'invention :

L'exemple 11 se différencie de l'exemple 10 en ce que le polydiméthysiloxane α,ω-vinyle est a une masse moléculaire moyenne en masse (Mw) de 25 000 g/mol (Sigma-Aldrich, 433012). Le ratio entre le nombre de motifs (MeHSiO_{2/2}) et le nombre de groupes vinyles est de 32. La composition de caoutchouc silicone réticulée d'épaisseur 5-10 µm présente une bonne adhérence à la membrane et ne se décolle pas de la membrane même après avoir subi successivement 10 élongations à 100% de déformation.

### Exemple 12 conforme à l'invention :

L'exemple 12 se différencie de l'exemple 10 en ce que le polydiméthysiloxane α,ω-vinyle a une masse moléculaire moyenne en masse de 117 000 (DMS V46, Gelest). Le ratio entre le nombre de motifs (MeHSiO_{2/2}) et le nombre de groupes vinyles est de 32.

La composition de caoutchouc silicone réticulée d'épaisseur 5-10 µm présente une bonne adhérence à la membrane et ne se décolle pas de la membrane même après avoir subi successivement 10 élongations à 100% d'allongement.

### Exemple 13 conforme à l'invention :

L'exemple 13 se différencie de l'exemple 10 en ce que le poly(méthylhydro)siloxane a une masse moléculaire moyenne en masse de 950 g/mol (Aldrich, 482196). Le ratio entre le nombre de motifs (MeHSiO_{2/2}) et le nombre de groupes vinyles est de 32.

La composition de caoutchouc silicone réticulée d'épaisseur 5-10 µm présente une bonne adhérence à la membrane et ne se décolle pas de la membrane même après avoir subi successivement 10 élongations à 100% d'allongement.

### Exemple 14 conforme à l'invention :

Une silice pyrogénée hydrophobe (5.8 g, « HDK-2000 », Wacker) est incorporée à un polydiméthysiloxane α,ω-vinyle (9.7 g, « V35 »de masse moléculaire moyenne en poids de 49500, Gelest) par mélangeage d'une minute dans un mélangeur (« StateMix »). Ce mélange résultant, une fois revenu à température ambiante, (23°C), est mis en suspension dans le décaméthylcyclopentasiloxane (10.8 g, TCI) qui contient 11.4 mg d'inhibiteur (1-éthynyl-1-cyclohexanol) par mélangeage d'une minute dans le mélangeur (« StateMix »). A ce mélange résultant, une fois revenu à température ambiante (23°C), sont incorporées les microparticules de polyamide ( 1.96 g, « Orgasol 2002 D NAT 1 », Arkema) par mélangeage d'une minute dans le mélangeur. Le mélangeage est arrêté pour laisser revenir le mélange à température ambiante. A ce nouveau mélange est incorporé le poly(méthylhydro)siloxane (PHMS) (1.93 g, référence 17,620-6, Sigma Aldrich) en solution dans le décaméthylcyclopentasiloxane (7.2 g, TCI) par mélangeage dans le mélangeur (« StateMix »). Le mélangeage est arrêté pour laisser revenir le mélange à température ambiante. Juste avant son utilisation, on lui ajoute 37.6 µl de catalyseur de Karstedt (2% dans le xylène, Sigma Aldrich) préalablement mis en solution dans 12.4 g de décaméthylcyclopentasiloxane. Le mélange résultant est homogénéisé dans le mélangeur (StateMix) pendant une minute. Dans la composition de caoutchouc silicone, le ratio entre le nombre de motifs (MeHSiO_{2/2}) et le nombre de groupes vinyles est de 80.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

La composition de caoutchouc silicone réticulée d'épaisseur 20-40 µm présente une bonne adhérence à la membrane et ne se décolle pas de la membrane même après avoir subi successivement 10 élongations à 100% de déformation.

Par ailleurs, il est observé que les microparticules de polyamide ne sont pas éliminées du revêtement par frottement. Les microparticules de polyamide ne sont pas arrachées du revêtement lorsqu'il est soumis au test de frottement.

### Exemple 15 non conforme à l'invention :

Une silice pyrogénée hydrophobe (5.45 g, « HDK-2000 », Wacker) est incorporée à un polydiméthysiloxane α,ω-vinyle (10.81 g, « V35 »de masse moléculaire moyenne en poids de 49500, Gelest) par mélangeage d'une minute dans un mélangeur (« StateMix »). Ce mélange résultant, une fois revenu à température ambiante, (23°C), est mis en suspension dans le décaméthylcyclopentasiloxane (12 g, TCI) qui contient 10.3 mg d'inhibiteur (1-éthynyl-1-cyclohexanol) par mélangeage d'une minute dans le mélangeur (« StateMix »). A ce mélange résultant, une fois revenu à température ambiante (23°C), sont incorporées les microparticules de polyamide ( 1.82 g, « Orgasol 2002 D NAT 1 », Arkema) par mélangeage d'une minute dans le mélangeur. Le mélangeage est arrêté pour laisser revenir le mélange à température ambiante. A ce nouveau mélange est incorporé le poly(méthylhydro)siloxane (PHMS) (0.108 g, référence 17,620-6, Sigma Aldrich) en solution dans le décaméthylcyclopentasiloxane (3.1 g, TCI) par mélangeage dans le mélangeur (« StateMix »). Le mélangeage est arrêté pour laisser revenir le mélange à température ambiante. Juste avant son utilisation, on lui ajoute 33.8 µl de catalyseur de Karstedt (2% dans le xylène, Sigma Aldrich) préalablement mis en solution dans 13.2 g de décaméthylcyclopentasiloxane. Le mélange résultant est homogénéisé dans le mélangeur (StateMix) pendant une minute. Dans la composition de caoutchouc silicone, le ratio entre le nombre de motifs (MeHSiO_{2/2}) et le nombre de groupes vinyles est de 4.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

La composition de caoutchouc silicone réticulée d'épaisseur 20-40 µm présente une mauvaise adhérence à la membrane et se décolle de la membrane.

## Revendications

1. Composition de caoutchouc silicone qui comprend une silice hydrophobe, un premier organopolysiloxane liquide ayant des motifs de répétition (R₂SiO_{2/2}) et ayant deux extrémités de chaîne portant chacune un groupe alcényle, un deuxième organopolysiloxane liquide ayant des motifs de répétition (R'HSiO_{2/2}) et ayant deux extrémités de chaîne portant chacune un groupe SiR'₃O_{1/2}, un catalyseur d'hydrosilylation au Pt(0) complexé par des ligands divinyltétraalkylsiloxane,
le deuxième organopolysiloxane étant un polyhydroalkylsiloxane,
le ratio entre le nombre de motifs (R'HSiO_{2/2}) et le nombre de groupes alcényles étant supérieur à 5, les symboles R, identiques ou différents, représentant un groupe alkyle, aryle ou aralkyle, les symbole R', identiques ou différents, représentant un groupe alkyle.

2. Composition de caoutchouc silicone selon la revendication 1 dans laquelle les groupes alcényles sont des groupes vinyles.

3. Composition de caoutchouc silicone selon l'une quelconque des revendications 1 à 2 dans laquelle les groupes représentés par les symboles R et R' contiennent 1 à 8 atomes de carbone, préférentiellement 1 à 3 atomes de carbone.

4. Composition de caoutchouc silicone selon l'une quelconque des revendications 1 à 3 dans laquelle au moins l'un des premier organopolysiloxane et deuxième organopolysiloxane est à chaîne linéaire, de préférence les deux sont à chaîne linéaire.

5. Composition de caoutchouc silicone selon l'une quelconque des revendications 1 à 4 dans laquelle le premier organopolysiloxane est un polydialkylsiloxane, de préférence un polydiméthylsiloxane.

6. Composition de caoutchouc silicone selon l'une quelconque des revendications 1 à 5 dans laquelle le deuxième organopolysiloxane est un polyhydrométhylsiloxane.

7. Composition de caoutchouc silicone selon l'une quelconque des revendications 1 à 6 dans laquelle les symboles R' dans SiR'₃O_{1/2} représentent un méthyle.

8. Composition de caoutchouc silicone selon l'une quelconque des revendications 1 à 7 dans laquelle le taux de silice hydrophobe est supérieur ou égal à 5% du poids total de silice, du premier organopolysiloxane et du deuxième organopolysiloxane et inférieur ou égal à 40% du poids total de silice, du premier organopolysiloxane et du deuxième organopolysiloxane .

9. Composition de caoutchouc silicone selon l'une quelconque des revendications 1 à 8 dans laquelle le ratio entre le nombre de motifs (R'HSiO_{2/2}) et le nombre de groupes alcényles est supérieur à 15.

10. Composition de caoutchouc silicone selon l'une quelconque des revendications 1 à 9 dans laquelle le ratio entre le nombre de motifs (R'HSiO_{2/2}) et le nombre de groupes alcényles est supérieur à 25.

11. Stratifié comprenant une première couche d'une composition réticulée de caoutchouc diénique et une deuxième couche d'une composition de caoutchouc silicone définie à l'une quelconque des revendications 1 à 10, la deuxième couche recouvrant directement la première couche.

12. Stratifié selon la revendication 11 dans lequel la composition réticulée de caoutchouc diénique de la première couche comprend un caoutchouc butyl.

13. Stratifié selon l'une quelconque des revendications 11 à 12 dans lequel le stratifié constitue tout ou partie une membrane de cuisson expansible.

## Patentansprüche

1. Silikonkautschukzusammensetzung, die eine hydrophobe Kieselsäure, ein erstes flüssiges Organopolysiloxan mit (R₂SiO_{2/2}) -Wiederholungseinheiten und mit zwei Kettenenden, die jeweils eine Alkenylgruppe tragen, ein zweites flüssiges Organopolysiloxan mit (R'HSiO_{2/2}) -Wiederholungseinheiten und mit zwei Kettenenden, die jeweils eine SiR'₃O_{1/2}-Gruppe tragen, und einen Hydrosilylierungskatalysator mit Pt(0), das mit Divinyltetraalkylsiloxan-Liganden komplexiert ist, umfasst,
wobei es sich bei dem zweiten Organopolysiloxan um ein Polyhydroalkylsiloxan handelt,
wobei das Verhältnis zwischen der Zahl von (R'HSiO_{2/2})-Einheiten und der Zahl von Alkenylgruppen größer als 5 ist, wobei die Symbole R, die gleich oder verschieden sein können, für eine Alkyl-, Aryl- oder Aralkylgruppe stehen, wobei die Symbole R', die gleich oder verschieden sein können, für eine Alkylgruppe stehen.

2. Silikonkautschukzusammensetzung nach Anspruch 1, wobei es sich bei den Alkenylgruppen um Vinylgruppen handelt.

3. Silikonkautschukzusammensetzung nach einem der Ansprüche 1 bis 2, wobei die durch die Symbole R und R' wiedergegebenen Gruppen 1 bis 8 Kohlenstoffatome, vorzugsweise 1 bis 3 Kohlenstoffatome, enthalten.

4. Silikonkautschukzusammensetzung nach einem der Ansprüche 1 bis 3, wobei mindestens eines von dem ersten Organopolysiloxan und dem zweiten Organopolysiloxan eine lineare Kette aufweist und vorzugsweise beide eine lineare Kette aufweisen.

5. Silikonkautschukzusammensetzung nach einem der Ansprüche 1 bis 4, wobei es sich bei dem ersten Organopolysiloxan um ein Polydialkylsiloxan, vorzugsweise ein Polydimethylsiloxan, handelt.

6. Silikonkautschukzusammensetzung nach einem der Ansprüche 1 bis 5, wobei es sich bei dem zweiten Organopolysiloxan um ein Polyhydromethylsiloxan handelt.

7. Silikonkautschukzusammensetzung nach einem der Ansprüche 1 bis 6, wobei die Symbole R' in SiR'₃O_{1/2} für ein Methyl stehen.

8. Silikonkautschukzusammensetzung nach einem der Ansprüche 1 bis 7, wobei der Gehalt an hydrophober Kieselsäure größer oder gleich 5 % des Gesamtgewichts an Kieselsäure, erstem Organopolysiloxan und zweitem Organopolysiloxan ist und kleiner oder gleich 40 % des Gesamtgewichts an Kieselsäure, erstem Organopolysiloxan und zweitem Organopolysiloxan ist.

9. Silikonkautschukzusammensetzung nach einem der Ansprüche 1 bis 8, wobei das Verhältnis zwischen der Zahl von (R'HSiO_{2/2})-Einheiten und der Zahl von Alkenylgruppen größer als 15 ist.

10. Silikonkautschukzusammensetzung nach einem der Ansprüche 1 bis 9, wobei das Verhältnis zwischen der Zahl von (R'HSiO_{2/2})-Einheiten und der Zahl von Alkenylgruppen größer als 25 ist.

11. Laminat, umfassend eine erste Schicht aus einer vernetzten Dienkautschukzusammensetzung und eine zweite Schicht aus einer Silikonkautschukzusammensetzung gemäß einem der Ansprüche 1 bis 10, wobei die zweite Schicht die erste Schicht direkt bedeckt.

12. Laminat nach Anspruch 11, wobei die vernetzte Dienkautschukzusammensetzung der ersten Schicht einen Butylkautschuk umfasst.

13. Laminat nach einem der Ansprüche 11 bis 12, wobei das Laminat ganz oder teilweise eine expandierbare Vulkanisationsmembran bildet.

## Claims

1. Silicone rubber composition which comprises a hydrophobic silica, a first liquid organopolysiloxane having (R₂SiO_{2/2}) repeat units and having two chain ends each bearing an alkenyl group, a second liquid organopolysiloxane having (R'HSiO_{2/2}) repeat units and having two chain ends each bearing an SiR'₃O_{1/2} group, a hydrosilylation catalyst with Pt(0) complexed with divinyltetraalkylsiloxane ligands,
the second organopolysiloxane being a polyhydroalkylsiloxane,
the ratio of the number of (R'HSiO_{2/2}) units to the number of alkenyl groups being greater than 5, the R symbols, which are identical or different, representing an alkyl, aryl or aralkyl group, the R' symbols, which are identical or different, representing an alkyl group.

2. Silicone rubber composition according to Claim 1, in which the alkenyl groups are vinyl groups.

3. Silicone rubber composition according to either one of Claims 1 and 2, in which the groups represented by the symbols R and R' contain from 1 to 8 carbon atoms, preferentially from 1 to 3 carbon atoms.

4. Silicone rubber composition according to any one of Claims 1 to 3, in which at least one of the first organopolysiloxane and second organopolysiloxane has a linear chain, preferably both have a linear chain.

5. Silicone rubber composition according to any one of Claims 1 to 4, in which the first organopolysiloxane is a polydialkylsiloxane, preferably a polydimethylsiloxane.

6. Silicone rubber composition according to any one of Claims 1 to 5, in which the second organopolysiloxane is a polyhydromethylsiloxane.

7. Silicone rubber composition according to any one of Claims 1 to 6, in which the R' symbols in SiR'₃O_{1/2} represent a methyl.

8. Silicone rubber composition according to any one of Claims 1 to 7, in which the content of hydrophobic silica is greater than or equal to 5% of the total weight of silica, of the first organopolysiloxane and of the second organopolysiloxane and less than or equal to 40% of the total weight of silica, of the first organopolysiloxane and of the second organopolysiloxane.

9. Silicone rubber composition according to any one of Claims 1 to 8, in which the ratio of the number of (R'HSiO_{2/2}) units to the number of alkenyl groups is greater than 15.

10. Silicone rubber composition according to any one of Claims 1 to 9, in which the ratio of the number of (R'HSiO_{2/2}) units to the number of alkenyl groups is greater than 25.

11. Laminate comprising a first layer of a crosslinked diene rubber composition and a second layer of a silicone rubber composition defined in any one of Claims 1 to 10, the second layer directly covering the first layer.

12. Laminate according to Claim 11, in which the crosslinked diene rubber composition of the first layer comprises a butyl rubber.

13. Laminate according to either one of Claims 11 and 12, in which the laminate constitutes all or part of an expandable curing bladder.
